(19) Europäisches Patentamt
European Patent Office
Office européen des brevets

(11) **EP 3 204 727 B1**

(12) **EUROPÄISCHE PATENTSCHRIFT**

(45) Veröffentlichungstag und Bekanntmachung des Hinweises auf die Patenterteilung:
**05.09.2018 Patentblatt 2018/36**

(21) Anmeldenummer: **15774898.9**

(22) Anmeldetag: **29.09.2015**

(51) Int Cl.:
***G01D 5/20*** *(2006.01)*

(86) Internationale Anmeldenummer:
**PCT/EP2015/072340**

(87) Internationale Veröffentlichungsnummer:
**WO 2016/055300 (14.04.2016 Gazette 2016/15)**

(54) **SENSORANORDNUNG ZUR BERÜHRUNGSLOSEN ERFASSUNG VON DREHWINKELN AN EINEM ROTIERENDEN BAUTEIL**

SENSOR ARRANGEMENT FOR CONTACTLESS MEASUREMENT OF THE ROTATION ANGLE OF A ROTATING PART

CAPTEUR DE MESURE SANS CONTACT DE L'ANGLE DE ROTATION D'UN COMPOSANT TOURNANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.10.2014 DE 102014220458**

(43) Veröffentlichungstag der Anmeldung:
**16.08.2017 Patentblatt 2017/33**

(73) Patentinhaber: **Robert Bosch GmbH**
**70442 Stuttgart (DE)**

(72) Erfinder:
• **AICHELE, Hermann**
**72762 Reutlingen (DE)**
• **EICHEL, Dirk**
**74321 Bietigheim-Bissingen (DE)**
• **BAFFOUN, Bassem**
**70839 Gerlingen (DE)**
• **AMELING, Ralf**
**73434 Aalen (DE)**
• **LEIDICH, Stefan**
**71277 Rutesheim (DE)**
• **STROBEL, Jens**
**71691 Freiberg am Neckar (DE)**
• **HAS, Remigius**
**71120 Grafenau-Daetzingen (DE)**
• **KRAYL, Oliver**
**70839 Gerlingen (DE)**

(56) Entgegenhaltungen:
DE-A1-102007 037 217     US-A1- 2005 253 576
US-A1- 2008 164 869      US-A1- 2013 021 023

**EP 3 204 727 B1**

**Beschreibung**

Die Erfindung geht aus von einer Sensoranordnung zur berührungslosen Erfassung von Drehwinkeln nach der Gattung des unabhängigen Patentanspruchs 1.

Es sind verschiedene induktive Drehwinkelsensoren aus dem Stand der Technik bekannt. Mehrheitlich wird die Kopplung zwischen einer Erregerspule und einer oder mehrerer Sensorspulen durch die Drehwinkellage eines Koppelelements (Target) beeinflusst. Die Auswertung von Koppelfaktoren erfordert eine aufwändige Elektronik.

Die DE 197 38 836 A1 offenbart beispielsweise einen induktiven Winkelsensor mit einem Statorelement, einem Rotorelement und einer Auswerteschaltung. Das Statorelement weist eine mit einer periodischen Wechselspannung beaufschlagte Erregerspule sowie mehrere Empfangsspulen auf. Das Rotorelement gibt die Stärke der induktiven Kopplung zwischen Erregerspule und Empfangsspulen in Abhängigkeit seiner Winkelposition relativ zum Statorelement vor. Die Auswerteschaltung bestimmt die Winkelposition des Rotorelements relativ zum Statorelement aus den in den Empfangsspulen induzierten Spannungssignalen.

Aus der US 2013/0021023 A1 und der US 2005/025576 ist jeweils eine Sensoranordnung zur berührungslosen Erfassung von Drehwinkeln an einem rotierenden Bauteil mit einer flächigen Detektionsspule und einem beweglichen scheibenförmigen Target bekannt.

Aus der DE 10 2007 037 217 A1 ist eine induktive Messeinrichtung zur berührungslosen Erfassung der relativen Drehposition zwischen zwei Körpern mit diametral angeordneten Spulen bekannt.

Aus der US 2008/0164869 A1 ist eine gattungsgemäße Sensoranordnung zur berührungslosen Erfassung von Drehwinkeln an einem rotierenden Bauteil bekannt. Das rotierende Bauteil ist mit einem scheibenförmigen Target gekoppelt, welches eine Metallfläche aufweist und in Verbindung mit einer Spulenanordnung, welche mehrere flächige Detektionsspulen aufweist, mindestens eine Information zur Ermittlung des aktuellen Drehwinkels des rotierenden Bauteils erzeugt. Die flächigen Detektionsspulen weisen jeweils zwei Teilspulen mit entgegengesetztem Wicklungssinn auf, welche einander gegenüberliegend am Umfang eines Kreises angeordnet sind. Die Metallfläche des rotierenden Targets beeinflusst durch Wirbelstromeffekte die Induktivität der mindestens einen flächigen Detektionsspule in Abhängigkeit vom Überdeckungsgrad.

Offenbarung der Erfindung

Die erfindungsgemäße Sensoranordnung zur berührungslosen Erfassung von Drehwinkeln mit den Merkmalen des unabhängigen Patentanspruchs 1 hat demgegenüber den Vorteil, dass die Messung eines Drehwinkels durch Bestimmung der Induktivität von einer Mehrzahl von Einzelspulen möglich ist. Vorzugsweise erzeugt die Auswerte- und Steuereinheit Auswertesignale mit einem Signalverlauf, welcher einem 3-Phasen Sinussignal oder einem linearen Verlauf sehr ähnlich ist, so dass die Auswertung mit einfachen Rechenregeln möglich ist. Zudem ergeben sich durch die entgegengesetzten Wicklungssinn der beiden Teilspulen vorteilhafte EMV-Eigenschaften in Bezug auf Emission und Störsignaleinkopplung. Des Weiteren ergeben sich durch die gegenüberliegende Anordnung der Teilspulen an einem Kreisumfang geringe Empfindlichkeiten gegenüber Montagetoleranzen.

Ausführungsformen der vorliegenden Erfindung stellen eine Sensoranordnung zur berührungslosen Erfassung von Drehwinkeln an einem rotierenden Bauteil zur Verfügung, welches mit einem scheibenförmigen Target gekoppelt ist, welches mindestens eine Metallfläche aufweist und in Verbindung mit einer Spulenanordnung, welche mindestens eine flächige Detektionsspule aufweist, mindestens eine Information zur Ermittlung des aktuellen Drehwinkels des rotierenden Bauteils erzeugt. Hierbei weist die mindestens eine flächige Detektionsspule zwei Teilspulen mit entgegengesetztem Wicklungssinn auf, welche einander gegenüberliegend am Umfang eines Kreises angeordnet sind, wobei die mindestens eine Metallfläche des rotierenden Targets durch Wirbelstromeffekte die Induktivität der mindestens einen flächigen Detektionsspule in Abhängigkeit vom Überdeckungsgrad beeinflusst.

Hierbei umfasst die Spulenanordnung drei flächige Detektionsspulen, deren sechs Teilspulen gleichmäßig verteilt am Umfang des Kreises angeordnet sind. Dies ermöglicht eine einfache Erzeugung von drei phasenverschobene im Wesentlichen sinusförmige Auswertesignalen oder von drei phasenverschobenen Auswertesignalen mit linearisierten Bereichen, welche durch einfache Rechenregeln zur Ermittlung des Drehwinkels ausgewertet werden können.

Das Target weist vier gleichmäßig verteilt am Umfang eines Kreises angeordnete Metallflächen auf, welche jeweils einen Öffnungswinkel von 45° aufweisen. Die Auswerte- und Steuereinheit erzeugt aus den durch die Rotationsbewegung des Targets bewirkten Induktivitätsänderungen der drei Detektionsspulen drei phasenverschobene Auswertesignale mit linearisierten Bereichen und wertet die linearisierten Bereiche zur Berechnung des Drehwinkels in einem Eindeutigkeitsbereich von 90° aus. Um den Eindeutigkeitsbereich auf 180° zu vergrößern, weist das Target zwei einander gegenüberliegende am Umfang eines Kreises angeordnete Metallflächen auf, welche jeweils einen Öffnungswinkel von 104° aufweisen, wobei die Auswerte- und Steuereinheit aus den durch die Rotationsbewegung des Targets bewirkten Induktivitätsänderungen der drei Detektionsspulen drei phasenverschobene Auswertesignale mit linearisierten Bereichen erzeugt. Die Auswerte- und Steuereinheit wertet die linearisierten Bereiche zur Berechnung des Drehwinkels in einem Eindeutigkeitsbereich von 180° aus.

Durch die in den abhängigen Ansprüchen aufgeführten Maßnahmen und Weiterbildungen sind vorteilhafte Verbesserungen der im unabhängigen Patentanspruch 1 angegebenen Sensoranordnung zur berührungslosen Erfassung von Drehwinkeln möglich.

Besonders vorteilhaft ist, dass eine Auswerte- und Steuereinheit mindestens ein Auswertesignal, welches die Induktivitätsänderung der mindestens einen Detektionsspule repräsentiert, erzeugen und zur Berechnung des Drehwinkels auswerten kann. In Abhängigkeit von der Anzahl und Ausführungsform der Detektionsspulen bzw der Teilspulen und/oder der Metallflächen am Target, kann die Auswerte- und Steuereinheit verschiedene Auswertesignale erzeugen.

In vorteilhafter Ausgestaltung der erfindungsgemäßen Sensoranordnung können die flächigen Teilspulen und/oder die Metallfläche jeweils als gleichförmige Kreissegmente und/oder Kreisringsegmente mit einem vorgegebenen Öffnungswinkel ausgeführt werden. Der Öffnungswinkel der flächigen Teilspulen weist vorzugsweise einen Wert im Bereich von 50° bis 70° auf. Der Öffnungswinkel der Metallflächen einen Wert im Bereich von 40° bis 110° auf. Der Öffnungswinkel der Metallflächen ist von der Anzahl der am Target angeordneten Metallflächen und vom gewünschten Signalverlauf des Auswertesignals abhängig.

In weiterer vorteilhafter Ausgestaltung der erfindungsgemäßen Sensoranordnung können die seitlichen Kanten der Metallflächen jeweils aus einer Geraden oder aus mindestens zwei Geraden mit unterschiedlichen Winkeln oder aus einer konkaven oder aus einer konvexen Kurve gebildet sind. Durch die Ausbildung der Kanten aus mindestens zwei Geraden mit unterschiedlichen Winkeln oder aus einer konkaven oder aus einer konvexen Kurve können die erzeugten Signalverläufe der Auswertesignale angepasst und die linearisierten Bereiche vergrößert werden.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen.

Kurze Beschreibung der Zeichnungen

Fig. 1 zeigt eine schematische Draufsicht auf ein Ausführungsbeispiel einer Spulenanordnung für eine erfindungsgemäße Sensoranordnung zur berührungslosen Erfassung von Drehwinkeln.

Fig. 2 zeigt eine schematische Draufsicht auf ein erstes Ausführungsbeispiel einer Sensoranordnung zur berührungslosen Erfassung von Drehwinkeln.

Fig. 3 zeigt eine schematische Draufsicht auf ein zweites Ausführungsbeispiel einer erfindungsgemäßen Sensoranordnung zur berührungslosen Erfassung von Drehwinkeln.

Fig. 4 zeigt eine schematische Draufsicht auf ein drittes Ausführungsbeispiel einer erfindungsgemäßen Sensoranordnung zur berührungslosen Erfassung von Drehwinkeln.

Fig. 5 bis 7 zeigen jeweils ein Ausführungsbeispiel einer Metallfläche eines Targets für eine erfindungsgemäße Sensoranordnung zur berührungslosen Erfassung von Drehwinkeln.

Fig. 8 zeigt ein Kennliniendiagramm der von der Sensoranordnung zur berührungslosen Erfassung von Drehwinkeln aus Fig. 2 erzeugten Auswertesignale.

Fig. 9 zeigt ein Kennliniendiagramm der von der erfindungsgemäßen Sensoranordnung zur berührungslosen Erfassung von Drehwinkeln aus Fig. 3 erzeugten Auswertesignale.

Fig. 10 zeigt ein Kennliniendiagramm der von der erfindungsgemäßen Sensoranordnung zur berührungslosen Erfassung von Drehwinkeln aus Fig. 4 erzeugten Auswertesignale.

Ausführungsformen der Erfindung

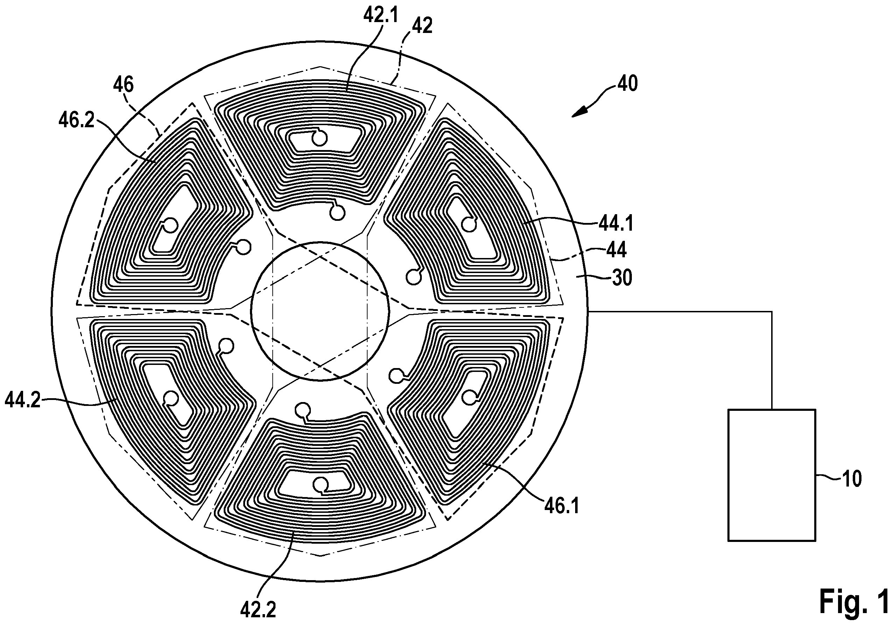

Wie aus Fig. 1 bis 4 ersichtlich ist, umfassen die dargestellten Ausführungsbeispiel einer Sensoranordnung 1, 1A, 1B zur berührungslosen Erfassung von Drehwinkeln an einem rotierenden Bauteil jeweils ein mit dem rotierenden Bauteil gekoppeltes Target 20, 20A, 20B, welches einen ringscheibenförmigen Grundkörper 22, 22A, 22B mit mindestens einer Metallfläche 24, 24A, 24B, 24C, 24D, 24E aufweist, und eine Spulenanordnung 40 mit mindestens einer flächige Detektionsspule 42, 44, 46. Das Target 20, 20A, 20B erzeugt in Verbindung mit der Spulenanordnung 40 mindestens eine Information zur Ermittlung des aktuellen Drehwinkels des rotierenden Bauteils. Hierbei weist die mindestens eine flächige Detektionsspule 42, 44, 46 zwei Teilspulen 42.1, 42.2, 44.1, 44.2, 46.1, 46.2 mit entgegengesetztem Wicklungssinn auf, welche einander gegenüberliegend am Umfang eines Kreises angeordnet sind. Hierbei beeinflusst die mindestens eine Metallfläche 24, 24A, 24B, 24C, 24D, 24E des rotierenden Targets 20, 20A, 20B durch Wirbelstromeffekte die Induktivität der mindestens einen flächigen Detektionsspule 42, 44, 46 in Abhängigkeit vom Überdeckungsgrad.

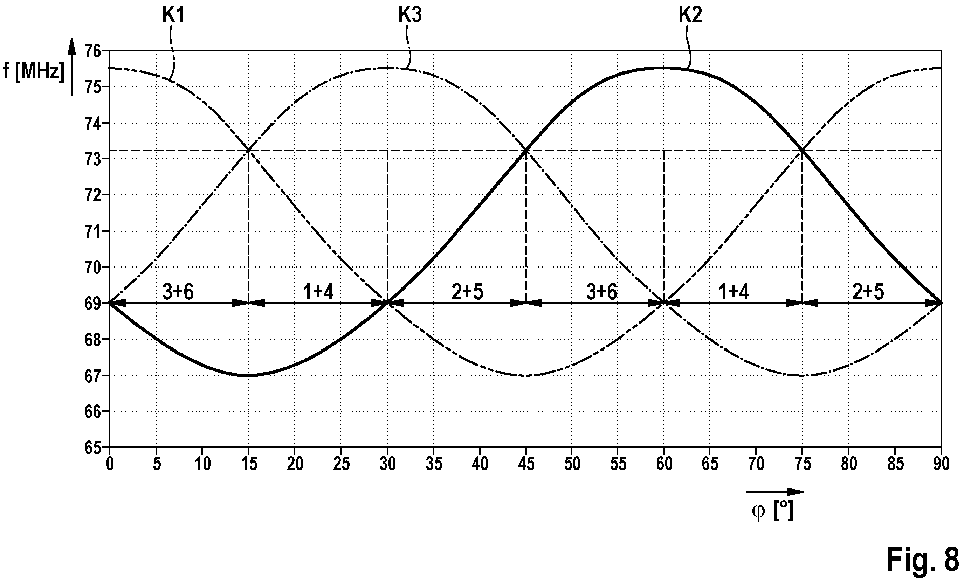

Wie aus Fig. 1 bis 4 weiter ersichtlich ist, ist die Spulenanordnung 40 in den dargestellten Ausführungsformen auf einer runden Leiterplatte 30 angeordnet und mit einer Auswerte- und Steuereinheit 10 elektrisch verbunden. Selbstverständlich muss die Leiterplatte 30 nicht rund sein, die Leiterplatte 30 kann auch eine andere geeignete Form aufweisen. Die Auswerte- und Steuereinheit 10 erzeugt mindestens ein Auswertesignal K1, K2, K3, K1A, K2A, K3A, K1B, K2B, K3B, welches die Induktivitätsänderung der mindestens einen Detektionsspule 42, 44, 46 repräsentiert, und wertet das mindestens eine Auswertesignal K1, K2, K3, K1A, K2A, K3A, K1B, K2B, K3B, das nachfolgend unter Bezugnahme auf Fig. 8 bis 10 näher beschrieben wird, zur Berechnung des Drehwinkels aus. In den dargestellten Kennliniendiagrammen gemäß Fig. 8 bis 10 ist entlang der senkrechten Achse eine Resonanzfrequenz aufgetragen, welche sich durch die Induktivitätsänderung der jeweiligen Detektionsspule 42, 44, 46 verändert. Selbstverständlich können auch andere geeignete messbare physikalische Größen verwendet werden, um Induktivitätsänderung der jeweiligen Detektionsspule 42, 44, 46 zu erfassen und darzustellen.

Der in den Zeichnungen transparent dargestellte ringscheibenförmige Grundkörper 22, 22A, 22 des Targets 20, 20A, 20B ist mit einem vorgegebenen gleichbleibenden axialen Abstand über bzw. unter der Leiterplatte 30 angeordnet. Bei den dargestellten Ausführungsbeispielen kann das nicht näher dargestellte rotierende Bauteil eine Welle sein, welche mit einem ausreichenden seitlichen Spiel durch die kreisförmige Öffnung in der Leiterplatte 30 geführt ist und drehfest mit dem Grundkörper 22, 22A, 22 des Targets 20, 20A, 20B verbunden ist.

Wie aus Fig. 1 bis 4 weiter ersichtlich ist, umfasst die Spulenanordnung 40 in den dargestellten Ausführungsbeispielen drei über den Umfang der kreisförmigen Spulenanordnung 40 verteilt angeordnete Detektionsspulen 42, 44, 46, welche jeweils in zwei Teilspulen 42.1, 42.2, 44.1, 44.2, 46.1 46.2 aufgeteilt sind. Somit sind insgesamt sechs Teilspulen 42.1, 42.2, 44.1, 44.2, 46.1 46.2 gleichmäßig über den Umfang der kreisförmigen Spulenanordnung 40 verteilt angeordnet. Die beiden Teilspulen 42.1, 42.2, 44.1, 44.2, 46.1 46.2 der jeweiligen Detektionsspulen 42, 44, 46 sind jeweils so über den Umfang der kreisförmigen Spulenanordnung 40 verteilt angeordnet, dass laterale Lagetoleranzen in erster Näherung kompensiert werden. In den dargestellten Ausführungsbeispielen sind die beiden Teilspulen 42.1, 42.2, 44.1, 44.2, 46.1 46.2 der jeweiligen Detektionsspule 42, 44, 46 einander gegenüberliegend am Umfang der kreisförmigen Spulenanordnung 40 angeordnet. Der Wicklungssinn der beiden Teilspulen 42.1, 42.2, 44.1, 44.2, 46.1 46.2 der jeweiligen Detektionsspule 42, 44, 46 ist entgegengesetzt, so dass das magnetische Feld in einem Abstand ab ca. drei Spulendurchmessern sehr klein ist und sich Störsignaleinkopplungen kompensieren können.

Wie insbesondere aus Fig. 1 ersichtlich ist, sind die flächigen Teilspulen 42.1, 42.2, 44.1, 44.2, 46.1, 46.2 jeweils als gleichförmige Kreisringsegmente mit einem vorgegebenen Öffnungswinkel von 60° ausgeführt. In den dargestellten Ausführungsbeispielen besteht eine erste Detektionsspule 42 aus den beiden flächigen Teilspulen 42.1 und 42.2, eine zweite Detektionsspule 44 besteht aus den beiden flächigen Teilspulen 44.1 und 44.2 und eine dritte Detektionsspule 46 besteht aus den beiden flächigen Teilspulen 46.1 und 46.2.

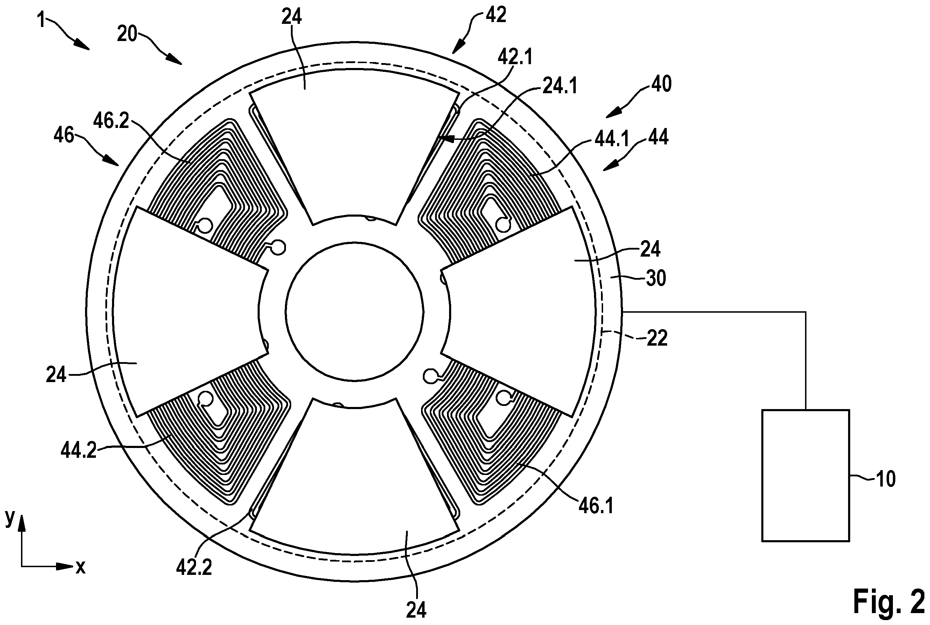

Wie aus Fig. 2 weiter ersichtlich ist, umfasst das Target 20 des dargestellten ersten Ausführungsbeispiels der Sensoranordnung 1 zur berührungslosen Erfassung von Drehwinkeln an einem rotierenden Bauteil vier kreisringsegmentförmige Metallflächen 24 mit einem Öffnungswinkel von 60°. Wie aus dem zugehörigen Kennliniendiagramm gemäß Fig. 8 ersichtlich ist, verlaufen die drei erzeugten phasenverschobenen Auswertesignale K1, K2, K3 nahezu sinusförmig, wobei die Auswerte- und Steuereinheit 10 ein erstes Auswertesignal K1 durch Auswerten der ersten Detektionsspule 42 mit den Teilspulen 42.1 und 42.2 erzeugt, ein zweites Auswertesignal K2 durch Auswerten der zweiten Detektionsspule 44 mit den Teilspulen 44.1 und 44.2 erzeugt und ein drittes Auswertesignal K3 durch Auswerten der dritten Detektionsspule 46 mit den Teilspulen 46.1 und 46.2 erzeugt. Des Weiteren besteht eine Symmetrie zwischen den Teilspulen 42.1 und 42.2, 44.1 und 44.2 sowie 46.1 und 46.2. Bei exakt mittiger Lage des Targets 20 gegenüber der Spulenanordnung 40 gibt es keine Unterschiede zwischen den jeweiligen Partnern und den Auswertesignalen K1, K2, K3.

Fig. 2 zeigt beispielhaft die Lage der Targets 20 bei einem Drehwinkel von 0°, wobei die Festlegung per Definition erfolgt. Es ist offensichtlich, dass eine Verschiebung des Mittelpunkts des Targets 20 in positive y-Richtung (Orientierung entsprechend der Blattebene) zu einer Vergrößerung der Überdeckung der zweiten Teilspule 46.2 der dritten Detektionsspule 46 und zu einer Verkleinerung der Überdeckung der ersten Teilspule 46.1 der dritten Detektionsspule 46 führt. Der gleiche Zusammenhang gilt für die Teilspulen 44.1 und 44.2 der zweiten Detektionsspule 44. Für die Teilspulen 42.1 und 42.2 der ersten Detektionsspule 42 gilt der Zusammenhang in dieser Stellung des Targets 20 nicht, da durch größere Auslegung des Targets 20 in radialer Richtung generell keine Beeinflussung dieser Teilspulen 42.1, 42.1 durch eine kleine (<5% des Durchmessers) Verschiebung des Targets 20 in y-Richtung stattfindet.

Es ist möglich, die Induktivität der sechs Teilspulen 42.1 und 42.2, 44.1 und 44.2 sowie 46.1 und 46.2 einzeln zu messen und die Korrektur entsprechend der nachfolgenden Vorschrift (1) durchzuführen, wobei Lm den berechneten Mittelwert der Induktivität der Teilspule repräsentiert, der sich aus den gemessenen Induktivitäten der Teilspulen 42.1, 42.2, 44.1, 44.2, 46.1 46.2 der jeweiligen Detektionsspule 42, 44, 46 und ergibt, wobei L1 und L2 jeweils die gemessene Induktivität der korrespondierenden Teilspulen 42.1, 42.2, 44.1, 44.2, 46.1 46.2 repräsentieren.

$$Lm = (L1 + L2)/2 \qquad (1)$$

Die Berechnung kann in der Auswerte- und Steuereinheit 10 erfolgen. Bei dem dargestellten Ausführungsbeispiel sind die beiden Teilspulen 42.1, 42.2, 44.1, 44.2, 46.1 46.2 der Detektionsspulen 42, 44, 46 elektrisch in Reihe geschaltet. Da die Kopplungsfaktoren zwischen den Teilspulen 42.1, 42.2, 44.1, 44.2, 46.1 46.2 mit k<0,02 verhältnismäßig klein sind, addieren sich die Induktivitäten. Die Mittelwertbildung erfolgt somit quasi "analog" ohne Rechenaufwand. Des Weiteren reduziert sich die Anzahl der Anschlüsse zwischen der Spulenanordnung 40 und der Auswerte- und Steuereinheit 10. Zur Reduzierung der Störempfindlichkeit und zur Reduzierung der Feldemission sind die Teilspulen 42.1, 42.2, 44.1, 44.2, 46.1 46.2, wie oben bereits ausgeführt, jeweils gegensinnig gewickelt. Dadurch reduziert sich die magnetische Feldstärke im Fernfeld. Bei Unterstellung eines homogenen Störfeldes werden in beide Teilspulen 42.1, 42.2, 44.1, 44.2, 46.1 46.2 gleiche Spannungen mit jeweils unterschiedlichem Vorzeichen induziert. Aufgrund der Reihenschaltung kompensieren sich beide Spannungen im Idealfall zu Null.

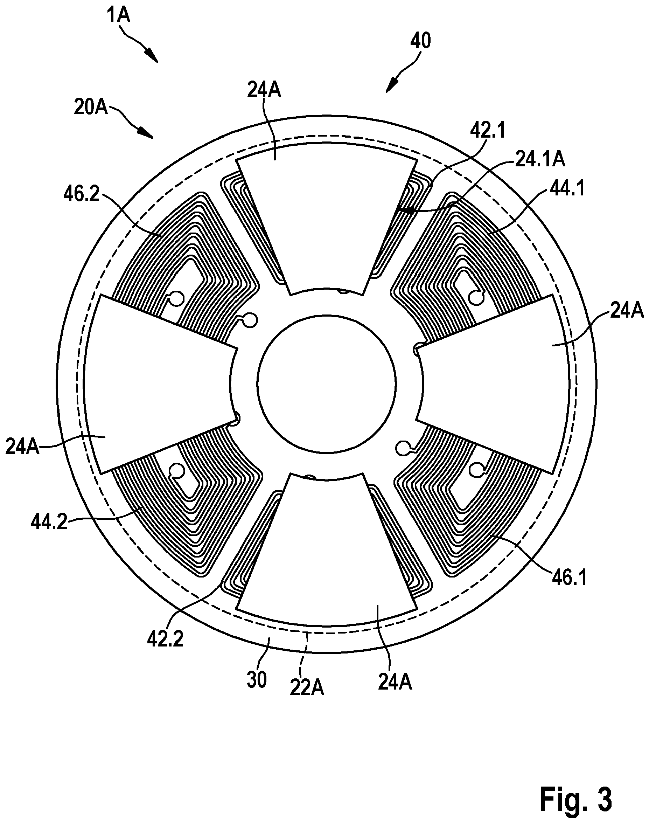

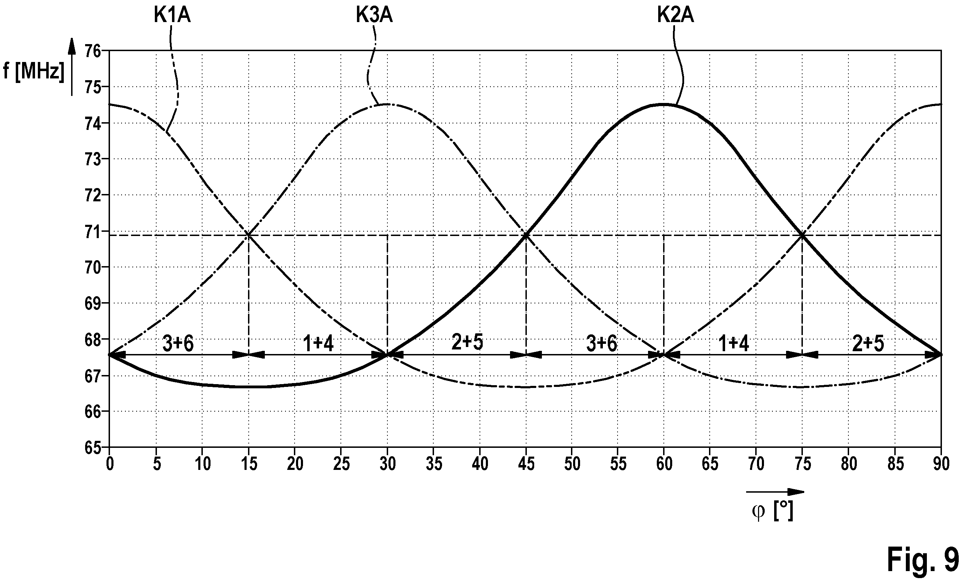

Wie aus Fig. 3 und 9 weiter ersichtlich ist, kann der Signalverlauf der Auswertesignale K1A, K2A, K3A durch eine Variation des Öffnungswinkels der Metallflächen 24A des Targets 24 von 60° im ersten Ausführungsbeispiel auf 45° im dargestellten zweiten Ausführungsbeispiel der erfindungsgemäßen Sensoranordnung 1A zur berührungslosen Erfassung von Drehwinkeln an einem rotierenden Bauteil in einem weiten Bereich linearisiert werden.

Wie aus Fig. 3 weiter ersichtlich ist, umfasst das Target 20A des dargestellten zweiten Ausführungsbeispiels der erfindungsgemäßen Sensoranordnung 1A analog zum ersten Ausführungsbeispiel vier kreisringsegmentförmige Metallflächen 24A, welche allerdings jeweils einen Öffnungswinkel von 45° aufweisen. Wie aus dem zugehörigen Kennliniendiagramm gemäß Fig. 9 ersichtlich ist, weisen die drei erzeugten phasenverschobenen Auswertesignale K1A, K2A, K3A in weiten Bereichen einen linearen Verlauf auf. Die Auswerte- und Steuereinheit 10 erzeugt analog zum ersten Ausführungsbeispiel ein erstes Auswertesignal K1A durch Auswerten der ersten Detektionsspule 42 mit den Teilspulen 42.1 und 42.2, ein zweites Auswertesignal K2A durch Auswerten der zweiten Detektionsspule 44 mit den Teilspulen 44.1 und 44.2 und ein drittes Auswertesignal K3A durch Auswerten der dritten Detektionsspule 46 mit den Teilspulen 46.1 und 46.2. Im dargestellten zweiten Ausführungsbeispiel wertet die Auswerte- und Steuereinheit 10 die linearisierten Bereiche zur Berechnung des Drehwinkels in einem Eindeutigkeitsbereich von 90° aus.

Zur Feinanpassung des Kurvenverlaufs kann die Form der Metallflächen 24A des Targets 20A, die im ersten und zweiten Ausführungsbeispiel als seitliche Kanten 24.1, 24.1A eine Gerade aufweisen, modifiziert werden.

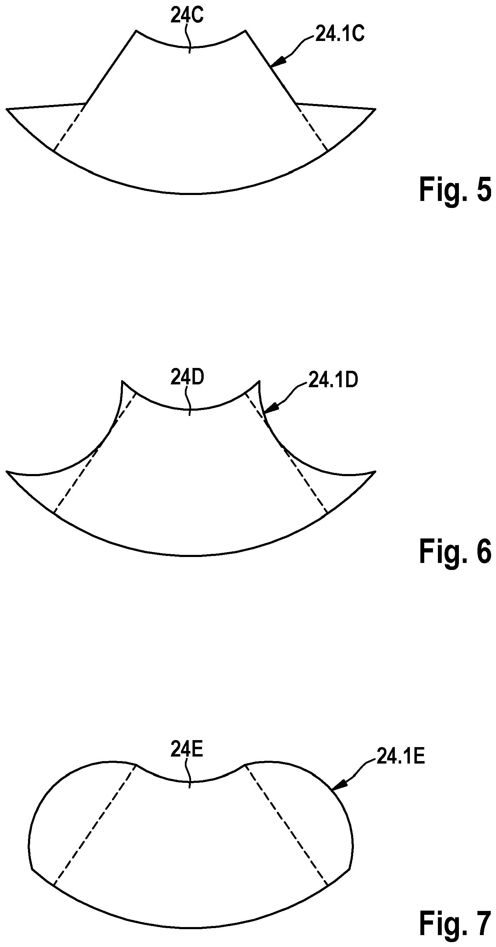

Wie aus Fig. 5 weiter ersichtlich ist, bestehen die seitlichen Kanten 42.1C im dargestellten Ausführungsbeispiel der Metallfläche 24C jeweils aus zwei Geraden mit unterschiedlichen Winkeln, wobei die Metallfläche 24C insgesamt spiegelsymmetrisch ausgeführt ist.

Wie aus Fig. 6 weiter ersichtlich ist, bestehen die seitlichen Kanten 42.1D im dargestellten Ausführungsbeispiel der Metallfläche 24D jeweils aus einer konkaven Kurve, wobei die Metallfläche 24D insgesamt spiegelsymmetrisch ausgeführt ist.

Wie aus Fig. 7 weiter ersichtlich ist, bestehen die seitlichen Kanten 42.1E im dargestellten Ausführungsbeispiel der Metallfläche 24E jeweils aus einer konvexen Kurve, wobei die Metallfläche 24E insgesamt spiegelsymmetrisch ausgeführt ist.

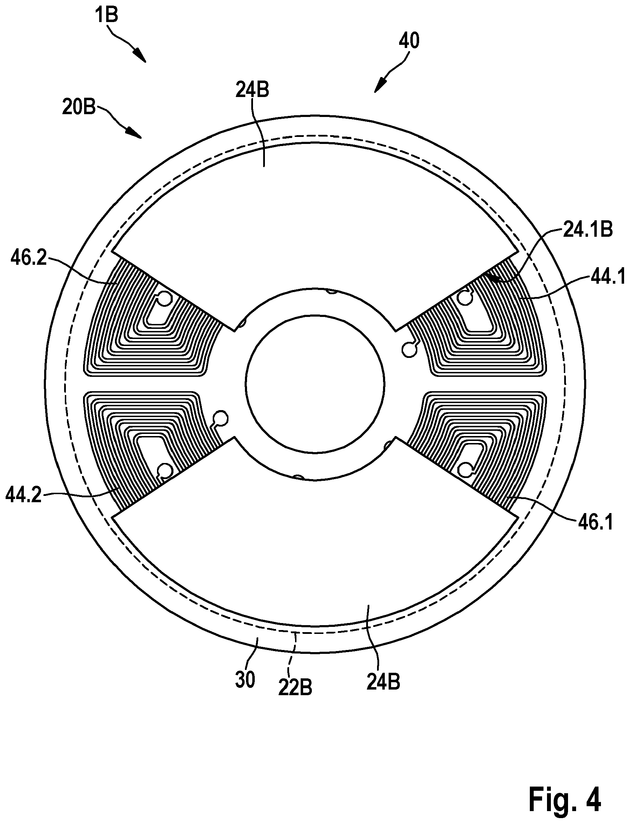

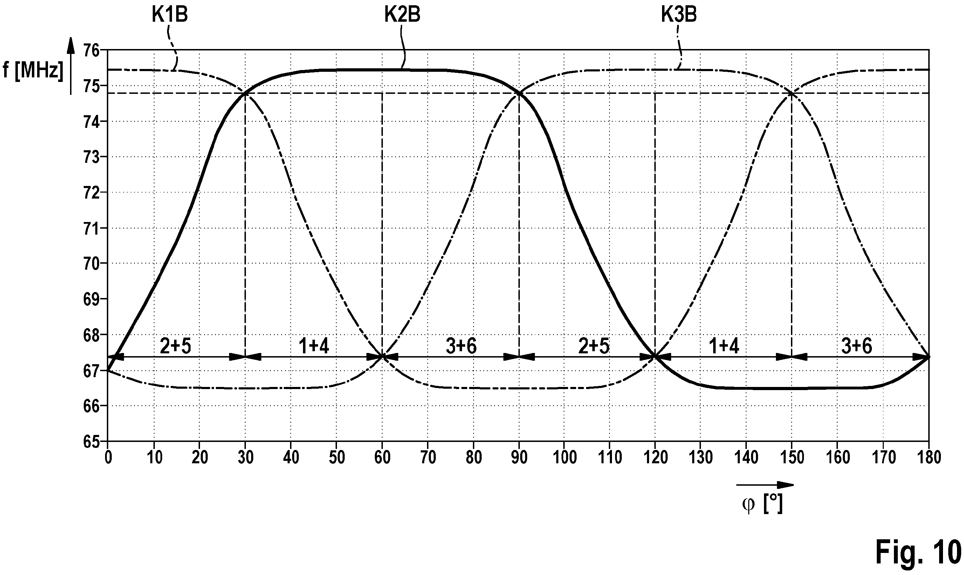

Wie aus Fig. 4 und 10 weiter ersichtlich ist, kann der Signalverlauf der Auswertesignale K1B, K2B, K3B durch Verwendung eines Targets 20B mit zwei Metallflächen 24B und einer Anpassung des Öffnungswinkels auf 104° im dargestellten dritten Ausführungsbeispiel der erfindungsgemäßen Sensoranordnung 1B zur berührungslosen Erfassung von Drehwinkeln an einem rotierenden Bauteil ebenfalls in einem weiten Bereich linearisiert werden. Durch die Verwendung von nur zwei Metallflächen 24B vergrößert sich jedoch der Eindeutigkeitsbereich im Vergleich zum zweiten Ausführungsbeispiel von 90° auf 180°.

Wie aus Fig. 4 weiter ersichtlich ist, umfasst das Target 20B des dargestellten dritten Ausführungsbeispiels der erfindungsgemäßen Sensoranordnung 1B zwei kreisringsegmentförmige Metallflächen 24B, welche jeweils einen Öffnungswinkel von 104° aufweisen. Wie aus dem zugehörigen Kennliniendiagramm gemäß Fig. 10 ersichtlich ist, weisen die drei erzeugten phasenverschobenen Auswertesignale K1B, K2B, K3B in weiten Bereichen einen linearen Verlauf auf. Die Auswerte- und Steuereinheit 10 erzeugt analog zum ersten und zweiten Ausführungsbeispiel ein erstes Auswertesignal K1B durch Auswerten der ersten Detektionsspule 42 mit den Teilspulen 42.1 und 42.2, ein zweites Auswertesignal K2B durch Auswerten der zweiten Detektionsspule 44 mit den Teilspulen 44.1 und 44.2 und ein drittes Auswertesignal K3B durch Auswerten der dritten Detektionsspule 46 mit den Teilspulen 46.1 und 46.2. Im dargestellten dritten Ausführungsbeispiel wertet die Auswerte- und Steuereinheit 10 die linearisierten Bereiche zur Berechnung des Drehwinkels in einem Eindeutigkeitsbereich von 180° aus.

**Patentansprüche**

1. Sensoranordnung zur berührungslosen Erfassung von Drehwinkeln an einem rotierenden Bauteil, wobei das rotierende Bauteil mit einem scheibenförmigen Target (20, 20A, 20B) gekoppelt ist, welches mindestens eine Metallfläche (24, 24A, 24B, 24C, 24D, 24E) aufweist und in Verbindung mit einer Spulenanordnung (40), welche mindestens eine flächige Detektionsspule (42, 44, 46) aufweist, mindestens eine Information zur Ermittlung des aktuellen Drehwinkels des rotierenden Bauteils erzeugt, wobei die mindestens eine flächige Detektionsspule (42, 44, 46) zwei Teilspulen (42.1, 42.2, 44.1, 44.2, 46.1, 46.2) mit entgegengesetztem Wicklungssinn aufweist, welche einander gegenüberliegend am Umfang eines Kreises angeordnet sind, wobei die mindestens eine Metallfläche (24, 24A, 24B, 24C, 24D, 24E) des rotierenden Targets (20, 20A, 20B) durch Wirbelstromeffekte die Induktivität der mindestens einen flächigen Detektionsspule (42, 44, 46) in Abhängigkeit vom Überdeckungsgrad beeinflusst, **dadurch gekennzeichnet, dass** die Spulenanordnung (40) drei flächige Detektionsspulen (42, 44, 46) umfasst, deren sechs Teilspulen (42.1, 42.2, 44.1, 44.2, 46.1, 46.2) gleichmäßig verteilt am Umfang des Kreises angeordnet sind, wobei das Target (20A, 20B) vier gleichmäßig verteilt am Umfang eines Kreises angeordnete Metallflächen (24A), welche jeweils einen Öffnungswinkel von 45° aufweisen, oder zwei einander gegenüberliegende am Umfang eines Kreises angeordnete Metallflächen (24B) aufweist, welche jeweils einen Öffnungswinkel von 104° aufweisen, wobei eine Auswerte- und Steuereinheit (10) aus den durch die Rotationsbewegung des Targets (20A ,20B) bewirkten Induktivitätsänderungen der drei Detektionsspulen (42, 44, 46) drei phasenverschobene Auswertesignale (K1A, K2A, K3A, K1B, K2B, K3B) mit linearisierten Bereichen erzeugt und die linearisierten Bereiche zur Berechnung des Drehwinkels in einem Eindeutigkeitsbereich von 90° oder 180° auswertet.

2. Sensoranordnung nach Anspruch 1, **dadurch gekennzeichnet, dass** die flächigen Teilspulen (42.1, 42.2, 44.1, 44.2, 46.1, 46.2) und/oder die Metallfläche (24, 24A, 24B, 24C, 24D, 24E) jeweils als gleichförmige Kreissegmente und/oder Kreisringsegmente mit einem vorgegebenen Öffnungswinkel ausgeführt sind.

3. Sensoranordnung nach Anspruch 2, **dadurch gekennzeichnet, dass** der Öffnungswinkel der flächigen Teilspulen (42.1, 42.2, 44.1, 44.2, 46.1, 46.2) einen Wert im Bereich von 50° bis 70° aufweist.

4. Sensoranordnung nach einem der Ansprüche 1 bis 3, **dadurch gekennzeichnet, dass** die seitlichen Kanten (24.1, 24.1A, 24.1B, 24.1C, 24.1D, 24.1E) der Metallflächen (24, 24A, 24B, 24C, 24D, 24E) jeweils aus einer Geraden oder aus mindestens zwei Geraden mit unterschiedlichen Winkeln oder aus einer konkaven oder aus einer konvexen Kurve gebildet sind.

**Claims**

1. Sensor arrangement for the contactless sensing of angles of rotation on a rotating part, wherein the rotating part is coupled with a disk-shaped target (20, 20A, 20B) which has at least one metal surface (24, 24A, 24B, 24C, 24D, 24E), and which generates at least one piece of information for ascertaining the instantaneous angle of rotation of the rotating part, in connection with a coil arrangement (40) which has at least one flat detection coil (42, 44, 46), wherein the at least one flat detection coil (42, 44, 46) has two coil sections (42.1, 42.2, 44.1, 44.2, 46.1, 46.2) having an opposite winding sense, which are arranged opposite one another on the circumference of a circle, wherein the at least one metal surface (24, 24A, 24B, 24C, 24D, 24E) of the roatating target (20, 20A, 20B) influences the inductance in the at least one flat detection coil (42, 44, 46) due to eddy current effects, as a function of the degree of overlap, **characterized in that** the coil arrangement (40) includes three flat detection coils (42, 44, 46), the six coil sections (42.1, 42.2, 44.1, 44.2, 46.1, 46.2) of which are uniformly distributed on the circumference of the circle, wherein the target (20A, 20B) has four metal surfaces (24A) which are arranged uniformly distributed on the circumference of a circle, each having an opening angle of 45°, or has two metal surfaces (24B) arranged opposite one another on the circumference of a circle, each having an opening angle of 104°, wherein an evaluation and control unit (10) generates three phase-shifted evaluation signals (K1A, K2A, K3A, K1B, K2B, K3B) with linearized regions from the changes in inductance in the three detection coils (42, 44, 46) caused by the rotational movement of the target (20A, 20B), and evaluates the linearized regions for calculating the angle of rotation in an unambiguous range of 90° to 180°.

2. Sensor arrangement according to Claim 1, **characterized in that** the flat coil sections (42.1, 42.2, 44.1, 44.2, 46.1, 46.2) and/or the metal surface (24, 24A, 24B, 24C, 24D, 24E) are designed in each case as uniform circle segments and/or annular segments having a predefined opening angle.

3. Sensor arrangement according to Claim 2, **characterized in that** the opening angle of the flat coil sections (42.1, 42.2, 44.1, 44.2, 46.1, 46.2) has a value in the range of 50° to 70°.

4. Sensor arrangement according to one of Claims 1 to 3, **characterized in that** the lateral edges (24.1, 24.1A, 24.1B, 24.1C, 24.1D, 24.1E) of the metal surfaces (24, 24A, 24B, 24C, 24D, 24E) are each formed from a straight line or from at least two straight lines with different angles or from a concave or a convex curve.

**Revendications**

1. Ensemble capteur pour la détection sans contact d'angles de rotation sur un élément en rotation, lequel l'élément en rotation est couplé à une cible (20, 20A, 20B) en forme de disque qui présente au moins une surface métallique (24, 24A, 24B, 24C, 24D, 24E) et qui génère, en association avec un ensemble de bobines (40) comprenant au moins une bobine de détection plane (42, 44, 46), au moins une information permettant de déterminer l'angle de rotation instantané de l'élément en rotation, dans lequel ladite au moins une bobine de détection plane (42, 44, 46) comprend deux parties de bobine (42.1, 42.2, 44.1, 44.2, 46.1, 46.2) à sens d'enroulement opposé, qui sont disposées l'une en face de l'autre sur la circonférence d'un cercle, dans lequel ladite au moins une surface métallique (24, 24A, 24B, 24C, 24D, 24E) de la cible en rotation (20, 20A, 20B) a une influence sur l'inductance de ladite au moins une bobine de détection plane (42, 44, 46) sous les effets de courants de Foucault en fonction du degré de recouvrement, **caractérisé en ce que** l'ensemble de bobines (40) comprend trois bobines de détection planes (42, 44, 46) dont six parties de bobine (42.1, 42.2, 44.1, 44.2, 46.1, 46.2) sont disposées de manière répartie régulièrement sur la circonférence du cercle, dans lequel la cible (20A, 20B) comporte quatre surfaces métalliques (24A) réparties sur la circonférence d'un cercle, qui présentent respectivement un angle d'ouverture de 45°, ou deux surfaces métalliques (24B) disposées l'une en face de l'autre sur la circonférence d'un cercle, qui présentent respectivement un angle d'ouverture de 104°, dans lequel une unité d'évaluation et de commande (10) génère à partir des variations d'inductance provoquées par le mouvement de rotation de la cible (20A, 20B) des trois bobines de détection (42, 44, 46) trois signaux d'évaluation déphasés (K1A, K2A, K3A, K1B, K2B, K3B) présentant des domaines linéarisés et évalue les domaines linéarisés pour calculer l'angle de rotation dans une plage non ambiguë de 90° ou de 180°.

2. Ensemble capteur selon la revendication 1, **caractérisé en ce que** les parties de bobine planes (42.1, 42.2, 44.1, 44.2, 46.1, 46.2) et/ou les surfaces métalliques (24, 24A, 24B, 24C, 24D, 24E) sont respectivement réalisées sous la forme de segments de cercle de même forme et/ou de segments de couronne ayant un angle d'ouverture prédéterminé.

3. Ensemble capteur selon la revendication 2, **caractérisé en ce que** l'angle d'ouverture des parties de bobine planes (42.1, 42.2, 44.1, 44.2, 46.1, 46.2) présente une valeur se situant dans la plage de 50° à 70°.

4. Ensemble capteur selon l'une des revendications 1 à 3, **caractérisé en ce que** les bords latéraux (24.1, 24.1A, 24.1B, 24.1C, 24.1D, 24.1E) des surfaces métalliques (24, 24A, 24B, 24C, 24D, 24E) sont formés à partir d'une droite ou à partir d'au moins deux droites formant des angles différents ou à partir d'une courbe concave ou à partir d'une courbe convexe.

**Fig. 1**

EP 3 204 727 B1

Fig. 2

EP 3 204 727 B1

Fig. 3

Fig. 4

24C

24.1C

**Fig. 5**

24D

24.1D

**Fig. 6**

24E

24.1E

**Fig. 7**

Fig. 8

EP 3 204 727 B1

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19738836 A1
- US 20130021023 A1
- US 2005025576 A
- DE 102007037217 A1
- US 20080164869 A1